# EUROPEAN PATENT SPECIFICATION

(11) **EP 0 934 695 B1**
(45) Date of publication and mention of the grant of the patent: **07.03.2007**
(21) Application number: 98300889.7
(22) Date of filing: 06.02.1998
(51) Int. Cl.: A01K 1/015

(54) **Discharged urine or other waste fluids processing material for pet animals**
Material zur Aufnahme von Urin und anderen Ausflüssen von Haustieren
Matériau pour enlever l'urine ou les autres déchets liquides produits par des animaux domestiques

(43) Date of publication of application: 11.08.1999
(73) Proprietor: Peparlet Co., Ltd., Fujieda-shi, Shizuoka-ken (JP)
(72) Inventor: Otoguro, Masaaki, Yaizu-shi, Shizuoka-ken (JP)
(74) Representative: Rees, Alexander Ellison

(56) References cited:
- EP-A- 0 351 473
- EP-A- 0 585 928
- DE-A- 3 644 826
- DE-A- 4 028 933
- DE-C- 19 543 311
- US-A- 4 827 871
- US-A- 4 901 671

## Description

### BACKGROUND OF THE INVENTION

This invention relates to a discharged urine or other waste fluids processing material for pet animals, composed of fluid absorbent coarse particle matters, and more particularly to a processing material composed of fluid absorbent coarse particle matters which is used for processing discharged urine or other waste fluids of pet animals such as cats, household dogs, and the like.

The discharged urine or other waste fluids processing material composed of the fluid absorbent coarse particle matters is flatly laid in a tray so as to be used for processing the discharged urine or other waste fluids of cats and dogs. The feature of such discharged urine or other waste fluids processing material for pet animals resides in that only the portion of the coarse particle matters which have absorbed the urine or the like is removed and the removed portion is replenished with fresh coarse particle matters.

In order to take advantage of this feature, it is important that the coarse particle matters exhibit their fluid absorptive properties in a very limited urine or other waste fluids discharging area, and the urine, etc. are prohibited from dispersing to area other than the urine or other waste fluids discharging area and from permeating into the coarse particle matters in the area other than the urine or other waste fluids discharging area. However, the conventional comparative materials are usually obtained by pulverizing a wet starting material (water added starting material) with use of a perforated plate, a mesh, or an extruder having tiny through-holes.

The urine or other waste fluids processing material pulverized by such means as just mentioned above tends to have an irregular configuration of particles because the material is naturally torn off at the outlet ports of the tiny through-holes. The urine or other waste fluids processing material thus obtained is coarse in density at the torn-off portion and very small in composition density (large void). The void is further enlarged by drying, thus generating a honey comb (cavity) and cracking.

Such particles are ready crumbled and deteriorated in retention of fluid. As a result, the urine or other waste fluids discharging area is dispersed and fluid absorption area by the coarse particle matters is enlarged.

### SUMMARY OF THE INVENTION

It is, therefore a general object of the present invention to provide a discharged urine or other waste fluids processing material for pet animals, which is capable of obviating at least some of the problems inherent in the prior art.

According to the present invention there is provided a discharged urine or other waste fluids processing material for pet animals composed of fluid absorbent particles which are subjected to compression molding so as to have a prescribed particle configuration featuring a cylindrical or polygonal peripheral surface and one or both of an upper or lower surface being either convexly or concavely curved.

In a preferred embodiment the compression molded particles have no water added.

The fluid absorbent particles thus obtained are rapid in absorbing discharge urine or other waste fluids and excellent in desegregation when they are discarded in a toilet. Further, by providing a prescribed configuration, the quantity of the processing material to be laid in a unit area can be fixed, so that wasteful use of the material can be prevented, and in addition, the fluid absorbability of the processing material at the area where the material is laid can be uniformed.
Furthermore, cracking caused by torn-off and drying can be prevented from occurring. As a result, crumbling of the processing material can be prevented and dispersion and excessive permeation of urine, etc. into the coarse particle matters in an area adjacent to the urine or other waste fluids discharging area can be prevented.

Since the starting material is compression molded with addition of no water into a pulverized product, the particles can freely be blended with a fluid reacted matter and a temperature deteriorated matter as represented by a moisture absorptive polymer, so that the function is enhanced. In addition, the factory space can be efficiently used by eliminating a need of a provision of drying facilities and water processing facilities in the pulverizing line.
In the preferred embodiment, the fluid absorbent coarse particles are point-contacted each other at their circular configuration areas, or side-contacted each other at their polygonal configuration areas, so that they are as more intimately contacted with each other as possible, and so that they can be uniformly laid. In addition, by placing the fluid absorbent coarse particles such that the convexly curved configuration portions contact the surface of a tray to form an annular void around the top of the convexly curved configuration, the discharged urine, etc. can be retained and more smoothly absorbed under the effect of capillary action generated in the annular void. By generating this phenomenon to the individual coarse particles, dispensing and excessive permeation of urine, etc into the coarse particles in an area other than the urine or other waste fluids discharging area can be prevented efficiently.

Similarly, by placing the fluid absorbent coarse particles such that the concavely curved configuration portions face upwardly, the fluids can be retained by a urine receiving dish defined by the respective concave configuration portions, so that smooth absorption of urine, etc is enhanced and dispersion and permeation of urine, etc. can be prevented from becoming enlarged while efficiently retaining the urine, etc.

The particle matters are blended with fluid absorptive polymer so as to be pulverized, and this fluid absorptive polymer is weakly reacted on the surface of each particle matter so that a weak reaction layer (cover-coat) of the fluid absorptive polymer is formed on the surface.

Such blending (inner lining) of the fluid absorptive polymer and formation of the weal reaction layer are useful in compression molding with addition of no water. In doing so, the advantageous effect of the fluid absorptive polymer, which is readily gelled and coagulated by absorbing the discharged urine, etc., can be fully exhibited. Further, owing to a formation of the weak reaction layer by the fluid absorptive polymer, the particle matters can effectively be retained in configuration without degrading their fluid absorbability and the contained fluid absorptive polymer can be protected from moisture in a favorable manner.

The above-mentioned cover-coat can be formed from polyvinyl alcohol, starch powder, or the like.

### BRIEF DESCRIPTION OF THE DRAWINGS

Figs. 1(A)-1(B) are sectional views of a discharged urine or other waste fluids processing material for pet animals composed of fluid absorbent coarse matters one or both of the upper and lower surfaces of which exhibit a convexly curved configuration;
Figs. 2(A)-2(B) are sectional views of a discharged urine or other waste fluids processing material for pet animals composed of fluid absorbent coarse matters one or both of the upper and lower surfaces of which exhibit a concavely curved configuration;
Figs. 3(A)-3(B) are plan views showing a state in which the fluid absorbent coarse matters of Figs. 1 and 2, having a circular or a polygonal peripheral surface configuration are laid;
Figs. 4(A)-4(B) are sectional views of the fluid absorbent coarse matters having a convexly curved surface, as shown in Figs. 1(A)-1(B), for explaining the effect of retention of urine and other waste fluids, in case such fluid absorbent coarse matters are laid;
Figs. 5(A)-5(B) are sectional views of the fluid absorbent coarse matters having a concavely curved surface, as shown in Figs. 2(A)-2(B), for explaining the effect of retention of urine and other waste fluids, in case such fluid absorbent coarse matters are laid;
Figs. 6(A)-6(B) are sectional views of a mold for providing a convexly curved configuration to the fluid absorbent coarse matters of Figs. 1(A)-1(B);
Figs. 7(A)-7(B) are sectional views of a mold for providing a concavely curved configuration to the fluid absorbent coarse matters of Figs. 2(A)-2(B); and
Fig. 8 is a sectional view showing the fluid absorbent coarse matters of Figs. 1 and 2 covered with a cover-coat.

### DETAILED DESCRIPTION OF THE EMBODIMENTS

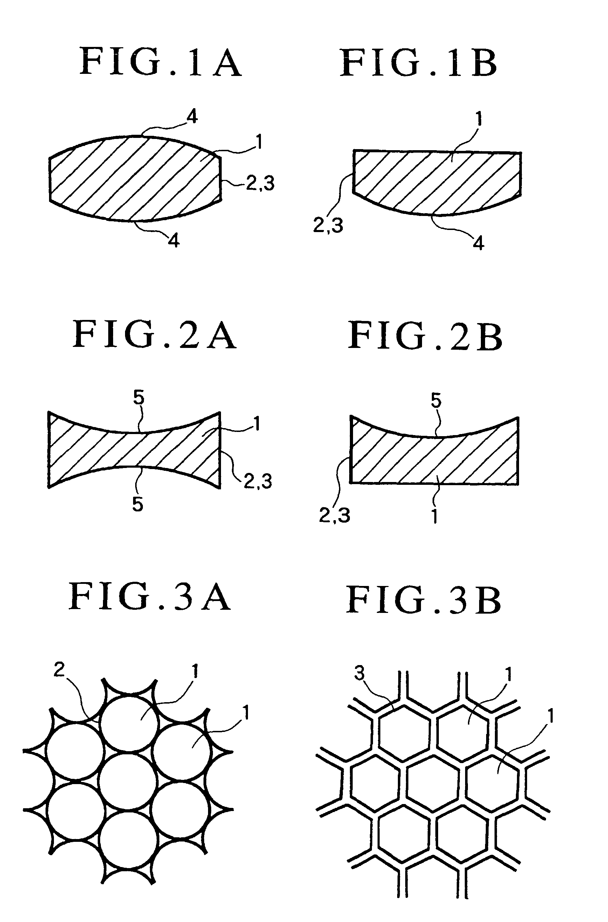

Several embodiments of the present invention will be described hereinafter in detail with reference to Figs. 1 through 7 of the accompanying drawings. In those embodiments, the present invention is applied to a case where a discharged urine or other waste fluids processing material for pet animals is composed of a fluid absorbent coarse particle matter 1.

In the respective embodiments to be described hereinafter, the fluid absorbent coarse particle matter 1 is chiefly composed of a starting material (hereinafter simply referred to as the "absorptive material") which is capable of providing a fluid absorbability when pulverized. The absorptive material providing a fluid absorbability when pulverized may include, for example, a wide variety of pulps (virgin pulp, old paper pulp, pulp residue passed through a paper-making mesh in the paper-making process, or paper-making sludge whose content of inorganic filler such as calcium carbonate is appropriately adjusted), paper powder, sawdust, wood powder, bean-curd refuse, rice hulls, coffee bean hulls, coffee bean residue, tea hulls, activated carbon, and the like. They may contain pulverized organic matter such as plastic, rubber, or the like.

Also, those absorptive materials, namely, the fluid absorbent coarse particle matter 1 may be blended with additives so that a required additional function can be applied thereto. An additive for chiefly applying a weight to the particle matter, namely, a weight additive, may be at least one kind of a pulverized inorganic filler selected from the group consisting of calcium carbonate, talc, silica gel, clay, zeolite, bentonite, lime, kaolin, borite, anhydrous mirabilite, sodium chloride, and the like.

Particularly, the anhydrous mirabilite and the sodium chloride are suitable as the weight additive and also effective as a discharged urine or other waste fluids processing material which is required to be readily dissolved in water and easily discarded into a toilet. They are also suited to a case where the processing material is compression molded with addition of no water.

As an additive for chiefly applying a coagulatability to the area contacting the discharged urine or the like, at least one kind of pulverized matters such as starch, carboxyl methyl cellulose, fluid absorptive polymer is selectively blended.

The fluid absorptive polymer is a suitable material because it is capable of enriching absorbability and is abundant in coagulation reactibility. Further, the coagulating material or the inorganic filler can provide slidability and enhance a smooth compression molding and a favorable removability after molding.

An antibacterial material or anti-mildew agent is used as an inside lining material or a surface layer material of the fluid absorbent coarse particle matter 1. In the alternative, a surface active agent is used as an inside lining material or a surface layer material of the fluid absorbent coarse particle matter 1. A deodorant is used as an inside lining material or a surface layer material against urine or the like.

### [First Embodiment (see Figs. 1 through 5)]

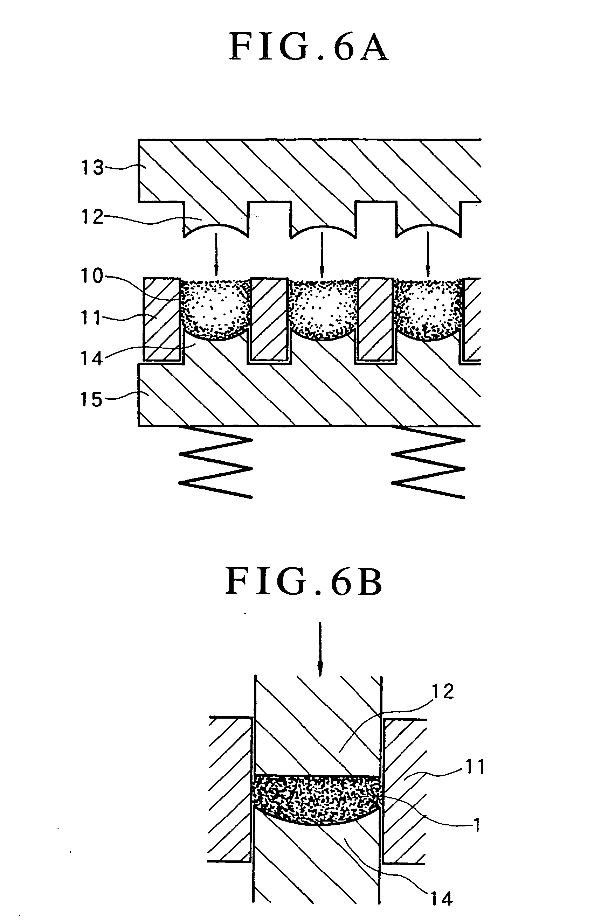

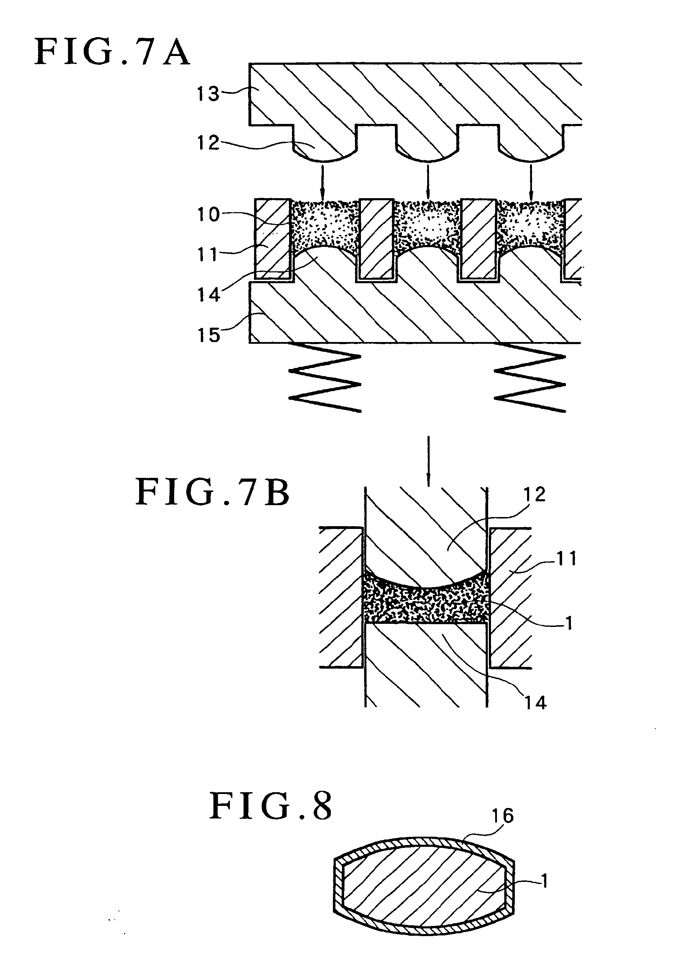

The absorptive material (including those blended with the various kinds of additives mentioned above) is compression molded with addition of no water so that it is pulverized to have a prescribed particle configuration, thereby forming the fluid absorbent coarse particle matter 1. Since the particles each have a prescribed configuration, the absorptive material is compressed molded with its overall peripheral surface confined by a closed mold as shown in Figs. 6 and 7. As a specific example, pulp is blended with an inorganic filler material, and further blended with fluid absorptive polymer. The resultant is compression molded with addition of no water, to form the fluid absorbent coarse particle matter 1 having a prescribed particle configuration.

As shown in Figs. 1 and 3, a circular configuration 2 or a polygonal configuration 3 (for example, hexagonal or octagonal) is provided to the peripheral surface of the fluid absorbent coarse particle matter 1, and a convexly curved configuration 4 is provided to one or both of the upper and the lower surface thereof by the compression molding with addition of no water.

Also, as shown in Figs. 2 and 3, a circular configuration 2 or a polygonal configuration 3 (for example, hexagonal or octagonal) is provided to the peripheral surface of the fluid absorbent coarse particle matter 1, and a concavely curved configuration 5 is provided to one or both of the upper and the lower surface thereof by the compression molding with addition of no water.

A flat configuration is provided to the upper and lower surfaces of the fluid absorbent coarse particle matter 1 by the compression molding with addition of no water.

The fluid absorbent coarse particle matter 1 thus obtained by the compression molding, exhibits such excellent features that urine, etc. is rapidly absorbed, and the disaggregation is excellent when the matter 1 is discarded into a toilet.

By providing a prescribed particle configuration, the processing material 1 can be laid uniformly and the fluid absorbability at the surface where the fluid absorbent coarse particle matter 1 is laid is equalized.

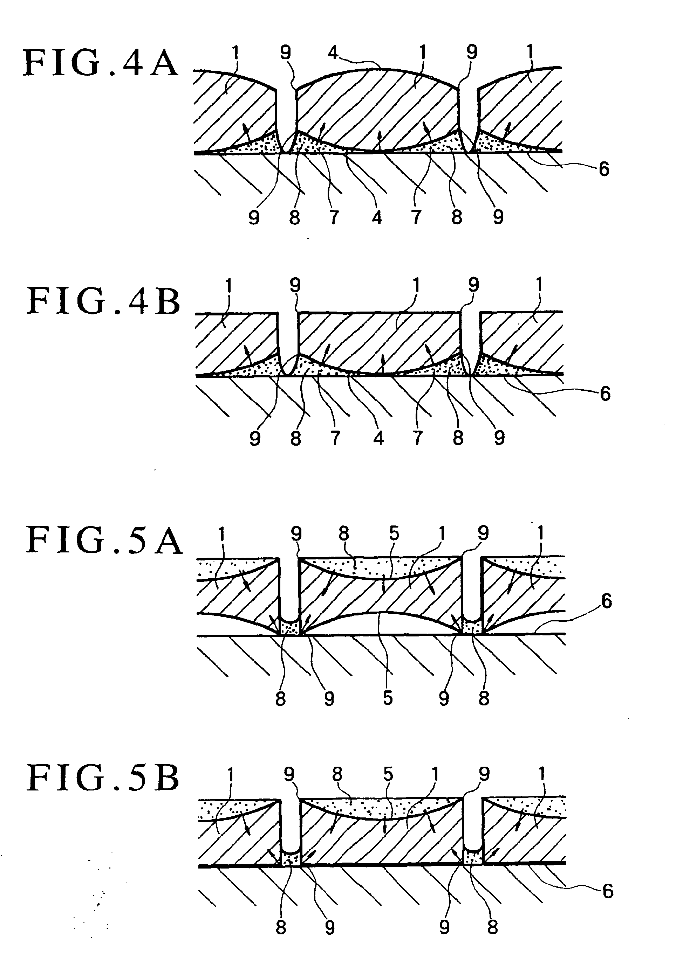

In addition, the convexly curved configuration 4 and the concavely curved configuration 5 of the upper and lower surfaces of the fluid absorbent coarse particle matters 1 enhance the function for capturing urine, or the like, as shown in Figs. 4 and 5. This function for capturing the urine, etc. will be described in detailed in the second embodiment.

### [Second Embodiment (see Figs. 1 through 5)]

The technical concept of the second embodiment resides in the feature that the absorbent material is compression molded with addition of water so that it is pulverized to have a prescribed particle configuration, thereby providing the convexly curved configuration 4 or the convexly curved configuration 5. Accordingly, the Figures showing the outer configuration is common with the first embodiment.

Specifically, the absorptive material (including those blended with the various kinds of additives mentioned above) is compression molded with addition no water so that it is pulverized to have a prescribed particle configuration and dried, thereby forming the fluid absorbent coarse particle matter 1. Since the particles each have a prescribed configuration, the absorptive material is compressed molded with its overall peripheral surface confined by a closed mold as shown in Figs. 6 and 7.

As shown in Figs. 1 and 3, a circular configuration 2 or a polygonal configuration 3 (for example, hexagonal or octagonal) is provided to the peripheral surface of the fluid absorbent coarse particle matter 1, and a convexly curved configuration 4 is provided to one or both of the upper and the lower surface thereof by the compression molding with addition of water.

Also, as shown in Figs. 2 and 3, a circular configuration 2 or a polygonal configuration 3 (for example, hexagonal or octagonal) is provided to the peripheral surface of the fluid absorbent coarse particle matter 1, and a concavely curved configuration 5 is provided to one or both of the upper and the lower surface thereof by the compression molding with addition of water.

By providing a prescribed particle configuration, the processing material 1 can be laid uniformly and the fluid absorbability at the surface where the fluid absorbent coarse particle matter 1 is laid is equalized. In addition, the convexly curved configuration 4 and the concavely curved configuration 5 of the upper and lower surfaces of the fluid absorbent coarse particle matters 1 enhance the function for capturing urine, or the like, as shown in Figs. 4 and 5.

That is, as shown in Figs. 4(A)-4(B), when the fluid absorbent coarse particle matter 1 is placed with the surface having the convexly curved configuration 4 downwardly contacting a laying surface 6 of a tray, or the like forming an animal commode, an annular void 7 is formed around the apex of the convexly curved configuration 4. This annular void 7 retains a urine 8 under the effect of capillary action and serves to absorb fluid by each fluid absorbent coarse particle matter 1.

As shown in Figs. 5(A)-5(B), when the concavely curved configuration 5 is upwardly placed on the laying surface 6, the concavely curved configuration 5 acts as a dish for receiving the urine 8 and also serves to absorb fluid by each fluid absorbent coarse particle matter 1.

As shown in Figs. 4B and 5B, in case one of the upper and lower surfaces of the fluid absorbent coarse particle matter 1 is applied with the convexly curved configuration 4 or the concavely curved configuration 5, the probability for the surface to contact the laying surface 6 either downwardly or upwardly is one half in the total fluid absorbent coarse particle matters 1 laid down.

In case one of the upper and lower surfaces of the fluid absorbent coarse particle matter 1 is applied with the convexly curved configuration 4 or the convexly curved configuration 5, as shown in Figs. 4(A) and 5(A), the convexly curved portions 4 of generally all quantities of the fluid absorbent coarse particle matters 1 contact the laying surface 6, and similarly, the concavely curved portions 5 of generally all quantities of the fluid absorbent coarse particle matters 1 are oriented upwardly with respect to the laying surface 6 and defined as urine receiving dishes.

In case both the upper and lower surfaces are applied with the concavely curved surface 5, the annular edge9 of the downwardly facing concavely curved configuration efficiently absorbs the urine overflowed from the upwardly facing concavely curved configuration 5 portion. By compressing molding the fluid absorbent coarse particle matters 1 with the closed mold of Figs. 6 and 7, a linear region having a rough compression density compared with other surfaces is formed on the annular edge 9 of the coarse particle matters 1. That is, the annular edge 9 having a rough compression density and a favorable fluid absorbability is formed.

### [Re: Compression Molding Process]

In the fluid absorbent coarse particle matter in the first and the second embodiment, the absorbent material is confined with the closed mold shown, as one example, in Figs. 6 and 7, and compressed from all directions, so that they each have a prescribed configuration.

This shaping mold comprises a peripheral surface shaping mold 11 having circular or a polygonal shaping through-holes 10, an upper surface shaping pressing mold 13 having at least one or a plurality of pressing pins 12 as a unit which are jerked into the shaping through-holes 10 from above, and a lower surface shaping pressure bearing mold 15 having one or a plurality of pressure bearing pins 14 as a unit which are inserted into the shaping through-holes 10 from under. After a fluid absorbent material (including an absorbent material obtained by selectively blending the above-mentioned various additives) is filled into each of the shaping through-holes 10, the pressing pin 12 and the pressure bearing pin 14 are mold-closed within each of the shaping through-holes 10. In doing so, the intended peripheral surface configuration and upper and lower configurations are provided.

As shown in Fig. 6(A), in case the convexly curved configuration 5 is provided to the upper and lower surfaces of each fluid absorbent coarse particle matter 1, the configuration of the opposing end faces of the pressing pins 12 and the pressure bearing pins 14 are formed as a convexly curved configuration.

Also, as shown in Fig. 7(A), in case the configuration of the upper and lower surfaces of the fluid absorbent coarse particle matters 1 is formed as the concavely curved configuration 4, the configuration of opposing end faces of the pressing pins 12 and the pressure bearing pins 14 is formed as a convexly curved surface.

Further, as shown in Figs. 6(B) and 7(B), in case the configuration of one of the upper and lower surfaces of the fluid absorbent coarse particle matter 1 is formed as the convexly curved configuration 4 or as the concavely curved configuration 5, one of the pressing pin 12 or the pressure bearing pin 14 is formed as a concavely curved configuration in the former, and one of the pressing pin 12 or the pressure bearing pin 14 is formed as a convexly curved configuration in the latter.

As shown in Figs. 3(A)-3(B), the fluid absorbent coarse particle matters 1 each provided with the prescribed configuration are point-contacted through their peripheral surface configuration and uniformly laid, and they are, likewise, side-contacted through their peripheral surface configuration and uniformly laid.

At the same time, the effect for capturing the urine, etc. through the convexly curved configuration 4 or the concavely curved configuration 5 is enhanced as described with reference to Figs 4 and 5, and as a result, excessive permeation of the urine, etc. into the fluid absorbent coarse particle matters 1 outside the urine or other waste fluids discharging area is prevented.

### [Third Embodiment (see Fig. 8)]

In this third embodiment, the fluid absorbent coarse particle matters 1 formed in accordance with the first and second embodiments are blended with water absorptive polymer so that a part of the water absorptive polymer forms a weak reaction layer 16 on the surface of each fluid absorbent coarse particle matter 1.

By impregnating the fluid absorbent coarse particle matters 1, which are blended with the water absorptive polymer, with water by shower, the weak reaction layer 16, with which the water absorptive polymer is not fully reacted, can be formed.

The weak reaction layer 16 functions as a cover coat. The idea herein disclosed indicates that the surface of each fluid absorbent coarse particle matter 1 is covered with a cover coat composed of other substance than water absorptive polymer.

One suitable example of the above-mentioned other substance than water absorptive polymer is a starch layer, a polyvinyl alcohol layer, a polyethylene glycol layer, or a polypropylene glycol layer.

The selected substance is liquefied and then an appropriate quantity of such liquefied substance is sprayed towards the surfaces of the fluid absorbent coarse particle matters 1 in a shower fashion, so that it is permeated into the surface layer portion of each fluid absorbent coarse particle matter 1.

The cover coat including the weak reaction layer 16 composed of the water absorptive polymer provides an antiweather property to the fluid absorbent coarse particle matters 1, so that aging change can be prevented, the fluid retaining effect can be maintained for long time, the effect of the additive blended with the fluid absorbent coarse particle matters can be maintained in a favorable manner, in addition, the configuration retaining effect of the fluid absorbent coarse particle matters 1 can be provided, powder raising caused by friction among the particles can be prevented, and the aggregating effect among the particle matters can be exhibited when they contact the discharged urine, etc. Particularly, in the first embodiment in which the water absorbent material is compression molded with addition of no water so as to have particles of a prescribed configuration, function can be enhanced by freely adding the additive readily reacted with temperature and moisture as represented by water absorptive polymer to the fluid absorbent material, namely, the fluid absorbent coarse particle matter 1. The cover coat can further enhance this function of the additive.

The present invention includes a case as one embodiment, in which the cover coat is applied while mingling the fluid absorbent coarse particle matter 1 of the first through third embodiments with paper powder. This paper powder is effective in properly exhibiting the initial fluid absorbent effect in addition to the effect for retaining the configuration and for maintaining the quality of products by the cover coat.

The fluid absorbent coarse particle matter obtained by compression molding with addition of no water so as to have particles of a predetermined configuration is rapid in absorbing the discharge urine, etc. and excellent in disaggregation when the fluid absorbent coarse particle matter is discarded in the toilet.

Also, by providing a prescribed configuration of particles, the quantity of the fluid absorbent coarse particle matters to be laid can be uniformed. By this, inefficient consumption of the fluid absorbent coarse particle matters can be prevented effectively, and a uniformed liquid absorbing effect can be exhibited at the urine or other waste fluids discharging area.

Also, a function as a discharged urine processing material can be enhanced by freely adding the additive which is readily reacted with moisture and temperature through the compression molding with addition of no water. In addition, by eliminating a need of a provision of water processing facilities and drying facilities, the production line can be assembled in a more cost-efficient and a function-efficient manner.

Also, by providing a convexly curved configuration or a convexly curved configuration to one or both of the upper and lower surfaces of the fluid absorbent coarse particle matter, the function for absorbing fluid can be enhanced by increasing the effect for retaining urine, etc. By this, the urine, etc. can effectively be prevented from excessively permeating into adjacent fluid absorbent coarse particle matters, and therefore, only the coarse particle matters in the urine or other waste fluids discharging area can be removed so as to be replaced with fresh coarse particle matters. This effect is further enhanced by providing a prescribed configuration to particles of the fluid absorbent coarse particle matters with addition of no water.

Also, by applying a layer of a cover coat to the fluid absorbent coarse particle matter, the effect for absorbing the fluid of the coarse particle matters can be maintained in an effective manner, and the effect of the fluid absorptive polymer as an inner lining can be exhibited in an efficient manner. In addition, the fluid absorbent coarse particle matter can be retained in configuration in a satisfactory manner. This effect is significantly appeared in case the fluid absorbent material with addition of no water is compression molded so as to have a prescribed configuration of particles.

## Claims

1. A discharged urine or other waste fluids processing material for pet animals composed of fluid absorbent particles (1) which are subjected to compression molding so as to have a prescribed particle configuration
**characterised in that** the prescribed particle configuration includes a cylindrical (2) or a polygonal (3) peripheral surface and one or both of an upper surface and a lower surface exhibit either a convexly (4) or concavely (5) curved configuration.

2. The discharged urine or other waste fluids processing material according to Claim 1 wherein the compression molded particles have no water added.

3. The discharged urine or other waste fluids processing material according to either of Claims 1 or 2
wherein the fluid absorbent particles are blended with a fluid absorbent polymer that forms a weak reaction layer on the surface of each of the compression molded fluid absorbent particles.

4. The discharged urine or other waste fluids processing material according to any one of the preceding claims
wherein the surface of each of the compression molded particles is covered with a cover coat.

## Patentansprüche

1. Verarbeitungsmaterial für ausgeschiedenen Urin oder andere Ausscheidungsflüssigkeiten für Haustiere, zusammengesetzt aus Flüssigkeit absorbierenden Partikeln (1), die einer Druckformung ausgesetzt werden, um eine vorgeschriebene Partikelkonfiguration zu haben,
**dadurch gekennzeichnet, dass** die vorgeschriebene Partikelkonfiguration eine zylindrische (2) oder eine vieleckige (3) periphere Oberfläche enthält und eine oder beide einer oberen Oberfläche und einer unteren Oberfläche entweder eine konvex (4) oder eine konkave (5) gebogene Konfiguration zeigen.

2. Verarbeitungsmaterial für ausgeschiedenen Urin oder andere Ausscheidungsflüssigkeiten nach Anspruch 1, wobei den druckgeformten Partikeln kein Wasser hinzugefügt wurde.

3. Verarbeitungsmaterial für ausgeschiedenen Urin oder andere Ausscheidungsflüssigkeiten nach Anspruch 1 oder 2,
wobei die Flüssigkeit absorbierenden Partikel mit einem Flüssigkeit absorbierenden Polymer, das auf der Oberfläche jedes der druckgeformten Flüssigkeit absorbierenden Partikel eine Schicht schwacher Reaktion bildet, gemischt werden.

4. Verarbeitungsmaterial für ausgeschiedenen Urin oder andere Ausscheidungsflüssigkeiten nach einem der vorstehenden Ansprüche,
wobei die Oberfläche jedes der druckgeformten Partikel mit einer Abdeckschicht bedeckt ist.

## Revendications

1. Matériau de traitement d'urine ou d'autres fluides de déchets déchargés pour animaux de compagnie, composé de particules capables d'absorber des fluides (1) qui sont soumises à moulage par compression de manière à adopter une configuration de particules prescrite, **caractérisé en ce que** la configuration de particules prescrite comprend une surface périphérique cylindrique (2) ou polygonale (3) et **en ce que** l'une ou les deux surfaces d'une surface supérieure et d'une surface inférieure manifeste(nt) une configuration courbée d'une manière convexe (4) ou d'une manière concave (5).

2. Matériau de traitement d'urine ou d'autres fluides de déchets déchargés selon la revendication 1, dans lequel les particules moulées par compression n'ont pas d'addition d'eau.

3. Matériau de traitement d'urine ou d'autres fluides de déchets déchargés selon l'une ou l'autre des revendications 1 ou 2, dans lequel les particules capables d'absorber des fluides sont mélangées à un polymère capable d'absorber des fluides qui forme une couche de réaction faible sur la surface de chacune des particules capables d'absorber des fluides, moulées par compression.

4. Matériau de traitement d'urine ou d'autres fluides de déchets déchargés selon l'une quelconque des revendications précédentes, dans lequel la surface de chacune des particules moulées par compression est couverte d'une couche de recouvrement.
